# EUROPEAN PATENT SPECIFICATION

(11) **EP 3 670 223 B1**
(45) Date of publication and mention of the grant of the patent: **29.06.2022**
(21) Application number: 18461655.5
(22) Date of filing: 21.12.2018
(51) Int. Cl.: B60K 1/00, B60K 11/06

(54) **A HEATING VENTILATION AND AIR CONDITIONING SYSTEM**
HEIZUNG-, LÜFTUNGS- UND KLIMATISIERUNGSSYSTEM
SYSTÈME DE CHAUFFAGE, DE VENTILATION ET DE CONDITIONNEMENT D'AIR

(43) Date of publication of application: 24.06.2020
(73) Proprietor: Valeo Autosystemy SP. Z.O.O., 32-050 Skawina (PL)
(72) Inventor: GODZINA, Radoslaw, PL 32-050 Skawina (PL); BARUS, Lukasz, PL 32-050 Skawina (PL); WATOR, Tomasz, PL 32-050 Skawina (PL); BRANKIEWICZ, Krzysztof, PL 32-050 Skawina (PL)
(74) Representative: Valeo Systèmes Thermiques

(56) References cited:
- CN-A- 101 687 460
- US-A1- 2007 102 213
- US-B1- 9 033 081

## Description

The present invention relates to a cooling module for a vehicle, particularly, the present invention relates to a protective grid system for ducts of the cooling module.

Generally, cooling modules for use in vehicles include at least one air inlet, at least one air outlet and a network of ducts for facilitating fluid communication between the at least one air inlet and the at least one air outlet. At least one fan system directs air received by the at least one air inlet to the at least one air outlet. Generally, the at least one air inlet is configured on front bumper or front fender of the vehicle for receiving the air required for cooling. The air so received by the at least one air inlet is passed through a region to be cooled such as for example, an engine and/or a battery depending upon whether the vehicle is an electric vehicle, an engine powered vehicle and a hybrid vehicle. The air after extracting heat from the region to be cooled traverses through the ducts and is ultimately expelled out of the vehicle through the at least one air outlet. Although, the at least one air inlet and the at least one air outlet are both open to the atmosphere, the at least one air outlet provides a comparatively easier entry to the remnants inside the ducts as the at least one air outlet is of considerable size and is disposed at the vehicle floor that is above the ground from where the remnants can easily enter. Such entry of remnants inside the ducts of the cooling module may cause blockage of the ducts, thereby deteriorating performance of the fan system and the thermal performance of the cooling module. This is a major issue in case of cooling modules for off road and crossover vehicle applications. Accordingly, there is a need for a system for preventing such remnants from entering the ducts, particularly through the air outlet of the cooling module without compromising on the thermal performance of the elements of the cooling module.

US9033081B1 and CN101687460A disclose cooling modules according to preamble of claim 1.

An object of the present invention is to provide a protective grid system that eliminates chances of blocking of ducts of an air cooling module due to entry and stacking of remnants such as leafs, twiggles, polythene bags, pebbles, etc. inside the cooling module.

Another object of the present invention is to provide protective grid system that prevents any remnants from entering ducts of a cooling module of a vehicle without compromising on thermal performance of elements of the cooling module.

Yet another object of the present invention is to provide a protective grid system that is simple in construction but also robust in construction.

Still another object of the present invention is to provide protective grid system that can be easily retrofitted on currently used cooling modules without requiring many modifications.

Yet another of the present invention is to provide protective grid system that enhances service life, energy efficiency, thermal performance and reliability of the elements of the cooling module.

Those objects are achieved by a cooling module according to claim 1.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A protective grid system, hereinafter referred to as "system" for ducts of a cooling module of a vehicle is disclosed in accordance with an embodiment of the present invention The system includes housing and at least one protective grid. The housing includes at least one inlet connected to the ducts for receiving air that had extracted heat from a region to be cooled and at least one outlet for egress of the air there through. The at least one protective grid is mounted over the at least one outlet to prevent articles of a predetermined size from entering inside the ducts of the cooling module while still permitting egress of air there through.

In accordance with an embodiment of the invention, the housing is configured with a fan system for directing air from the at least one inlet to the at least one outlet configured close to said fan system.

In accordance with another embodiment of the invention, the protective grid includes an array of elements that define restricted air passages.

In accordance with an embodiment of the invention, the elements are horizontally and vertically disposed beams that cross each other to configure the restricted air passages.

Generally, the beams are so configured and inclined that the beams prevent entry of articles of the pre-determined size inside the ducts of the cooling module from outside the vehicle.

Alternatively, the elements are honeycomb structures that configure the restricted air passages.

Further, the protective grid includes first engagement elements configured thereon that engages with complimentary second engagement elements configured on the at least one outlet for facilitating detachable mounting of the protective grid over the at least one outlet.

Preferably, the engagement elements are at least one of snap fit engagement elements, clips, screws and expansion pins.

In accordance with an embodiment, the protective grid is of metal and is configured by stamping process.

In accordance with another embodiment of the invention, the protective grid is formed of woven wires.

Alternatively, the protective grid is of composite plastic material and is configured by molding process.

Specifically, the protective grid is received in at least one socket configured around the at least one outlet.

Preferably, the region to be cooled is at least one of an engine and a battery depending upon whether the vehicle is an electric vehicle, an engine powered vehicle and a hybrid vehicle.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIG. 1a** illustrates an isometric view of a protective grid system in accordance with an embodiment of the present invention, in the **FIGURE 1a** are depicted a housing, an inlet and at least one outlet of the housing and a protective grid mounted over and covering the at least one outlet;
**FIG. 1b** illustrates another isometric view of the protective grid system of **FIGURE 1a****;**
**FIG. 2** illustrates an isometric view depicting the protective grid system of **FIG. 1a** and **FIG. 1b** without the protective grid covering any of the outlets of the housing;
**FIG. 3** illustrates an isometric view of the protective grid of **FIG. 1a** and **FGURE 1b** with first engagement elements configured thereon;
**FIG. 4** illustrates another isometric view of the protective grid of **FIG. 3****;** and
**FIG. 5** illustrates an isometric view of the protective grid system of **FIG. 1a** and **FIG. 1b** without a fan system.

It must be noted that the figures disclose the invention in a detailed enough way to be implemented, said figures helping to better define the invention if needs be. The invention should however not be limited to the embodiment disclosed in the description.

A protective grid system is disclosed in accordance with an embodiment of the present invention. Although, the protective grid system of the present invention is mounted on at least one outlet configured on ducts of a cooling module of a vehicle for preventing article of a pre-determined size from entering inside ducts through the at least one outlet, while still allowing air to escape out of the cooling module through the protective grid system, however, the protective grid system of the present invention can be used in any duct system configured in vehicles for restricting entry of articles of pre-determined size from entering inside the modules other than and not limited to cooling module while still permitting escape of the air there through and can also be used in any other applications.

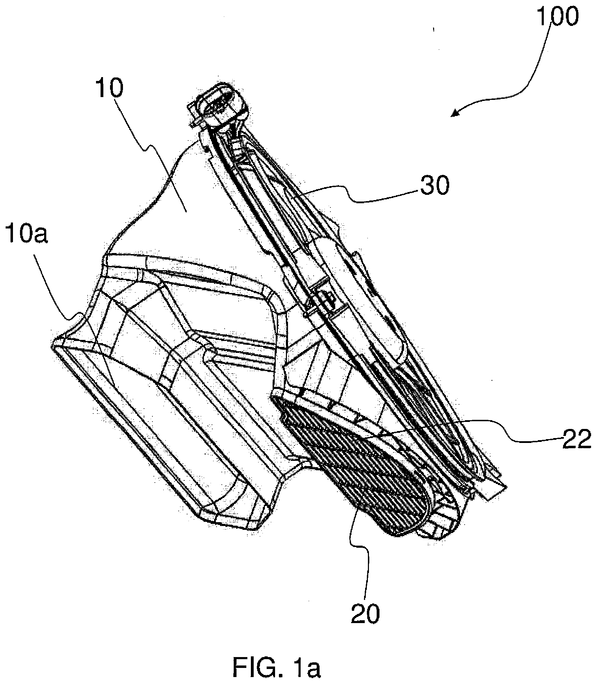

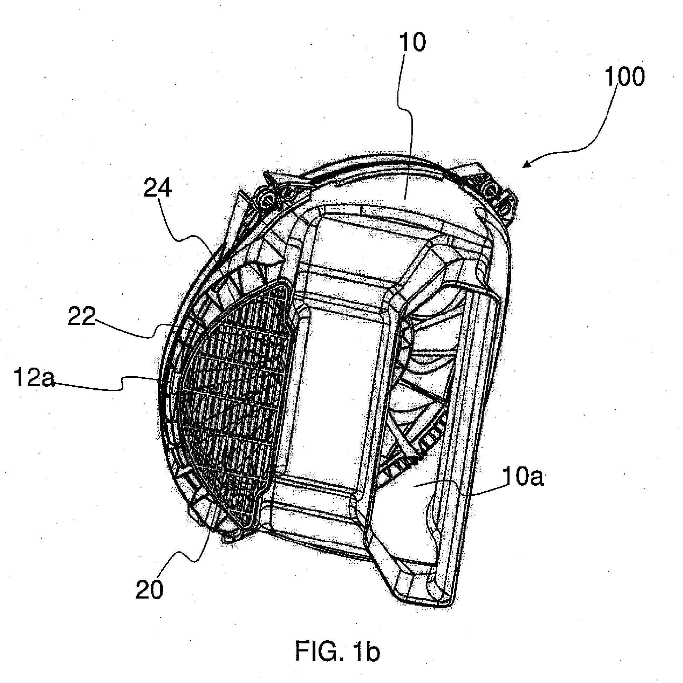

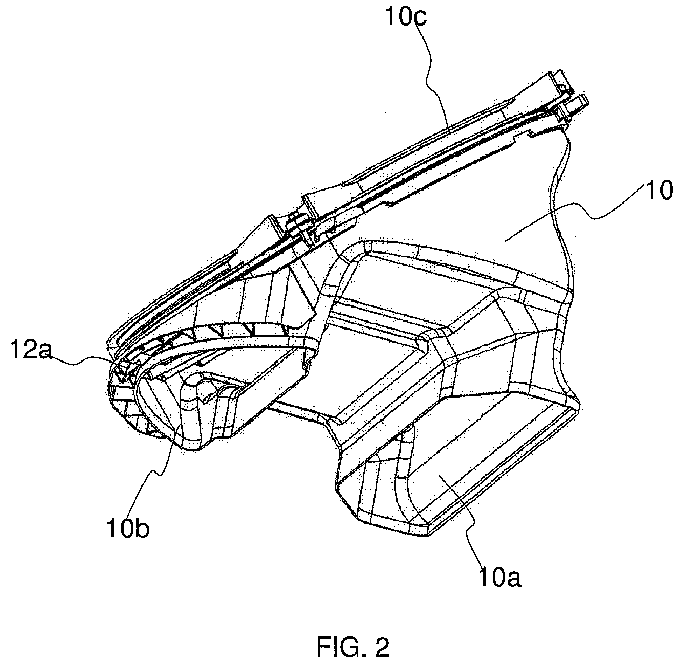

Referring to **Figure 1a** - **Figure 1b** of the accompanying drawings, an isometric view of a protective grid system **100** in accordance with an embodiment of the present invention is illustrated. In the accompanying drawings and the following description, the protective grid system **100** is explained for use in a cooling module of a vehicle for preventing articles of predetermined size from entering inside the ducts of the cooling module. Also, are depicted elements configuring the protective grid system **100,** specifically, a housing **10,** an inlet **10c** and at least one outlet **10a, 10b** of the housing **10** and a protective grid **20** mounted over and covering at least one of the outlet **10a, 10b.** The inlet **10c** is connected to the ducts for receiving air that had extracted heat from a region to be cooled and the at least one outlet **10a, 10b** is configured at the terminal end of the duct directed to the ground for the egress of the air from the cooling module. The region to be cooled is at least one of an engine, a heat exchanger and a battery depending upon whether the vehicle is an electric vehicle, an engine powered vehicle and a hybrid vehicle. However, the region to be cooled could be other than the battery or the engine of the vehicle. The **Figure 1a** and **Figure 1b** depict the protective grid **20** mounted over and covering the outlet **10b** to prevent articles of a predetermined size from entering inside the ducts of the cooling module while still permitting egress of air there through. **FIGURE 1a** and **FIGURE 1b** illustrate isometric views of the protective grid system **100.** **FIGURE 2** illustrates an isometric view depicting the protective grid system **100** without the protective grid **20** covering the any of the outlets **10a, 10b** of the housing **10.**

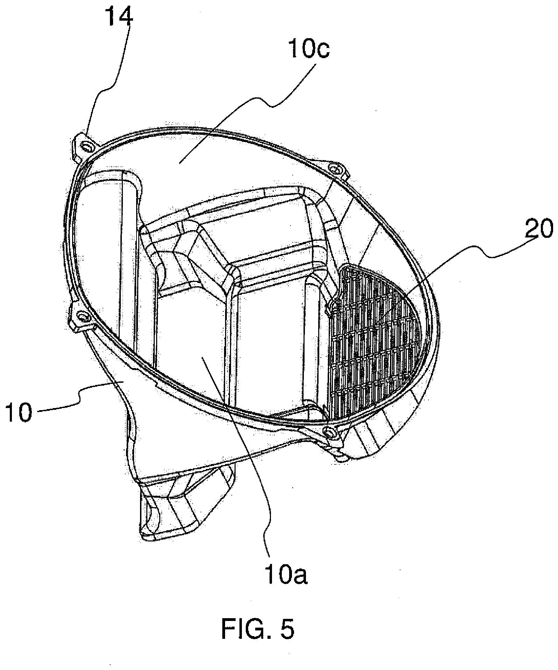

Generally, the housing **10** is configured with a fan system **30** for directing air from to the at least one inlet **10c** and subsequently the at least one outlet **10a, 10b** that are configured close to the fan system **30.** Specifically, the at least one inlet **10c** is disposed underneath the fan system **30** and receives air that had extracted heat from a region to be cooled whereas the at least one outlet **10a, 10b** is disposed downstream of the inlet **10c** and the fan system **30** and expels out the air from the cooling module. **FIG. 5** illustrates an isometric view of the protective grid system **100** without the fan system **30** for depicting the inlet **10c.** The fan system **30** is mounted over the inlet **10c** using a mounting arrangement. The mounting arrangement includes complimentary mounting elements **14** that are configured on the housing **10** along the periphery of the inlet **10c** and the fan system **30** respectively to facilitate mounting of the fan system **30** over the inlet **10c.** More specifically, the mounting arrangement includes holed flanges configured on the housing **10** along the periphery of and inlet **10c** the fan system **30.** The holes of holed flanges formed on the housing **10** and the fan system **30** are aligned with respect to each other and bolts pass through the aligned holes to facilitate mounting of the fan system **30** over the inlet **10c.** The housing **10** is of plastic material, however, the present invention is not limited to any particular configuration of the housing **10,** material of the housing **10** and placement of the fan system inside the housing **10.**

In accordance with an embodiment, instead of the protective grid **20,** multiple protective grids can be used and can be referred as at least one protective grid **20** or simply protective grid **20.** The at least one protective grid **20** includes an array of elements **22** that define restricted air passages **24.** The elements **22** can be horizontally and vertically disposed beams that cross each other to configure the restricted air passages **24.** The elements **22,** particularly, the beams are so configured and disposed that the beams prevents any undesirable elements of pre-determined size from entering inside the cooling module, for example, the configuration of the beams is such and the beams are inclined at such an angle that the beams configure enhanced blocking for any article striking the protective grid **20** from outside the vehicle, thereby preventing entry of articles of pre-determined size in the ducts of the cooling module through the protective grid **20,** while still permitting air to escape out through the gaps between the adjacent beams of the protective grid **20.** Alternatively, the beams can be arranged in any criss-cross manner to configure the restricted air passages **24.** Otherwise the elements **22** can be honeycomb structures that configure the restricted air passages **24.** The elements are so configured that the protective grid **20** blocks entry of the undesirable remnants without impacting thermal performance and pressure drop across the ducts of the cooling module. In accordance with an embodiment, the protective grid **20** is of metal and is configured by stamping process. Alternatively, the protective grid **20** is formed of woven wires. With such configuration, the protective grid **20** is simple in construction but also robust in construction. However, the present invention is not limited to any particular configuration of the protective grid **20** and array of elements configuring the restricted air passages **24** of the protective grid **20,** as far as the protective grid **20** is capable of preventing articles of predetermined size from entering inside the ducts of the cooling module while still allowing the air to pass through the protective grid **20.** With such configuration of the system **100** in accordance with an embodiment of the present invention, the protective grid system **100** is capable of preventing article of a pre-determined size from entering inside the ducts of the cooling module of the vehicle from outside the vehicle, while still allowing air to escape out of the cooling module through the protective grid **20** of the system **100.** Such configuration of the protective grid system **100** eliminates chances of blocking of the ducts of the air cooling module due to entry of remnants such as leafs, twiggles, polythene bags, pebbles, etc. inside the cooling module.

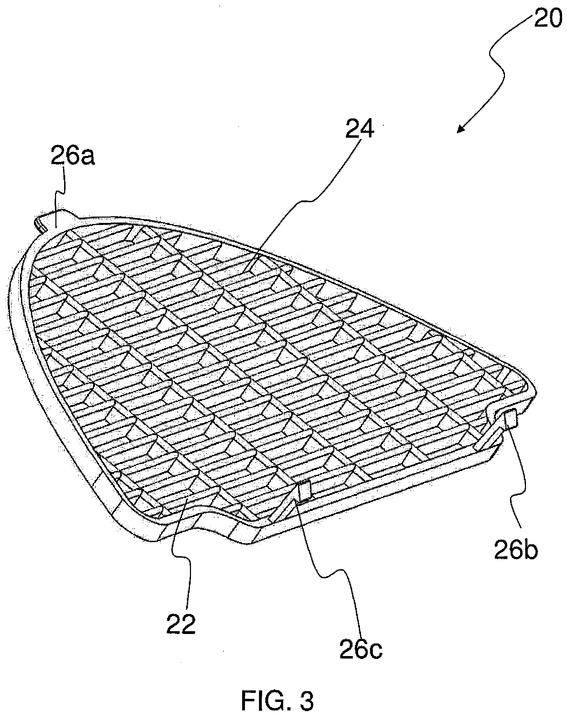

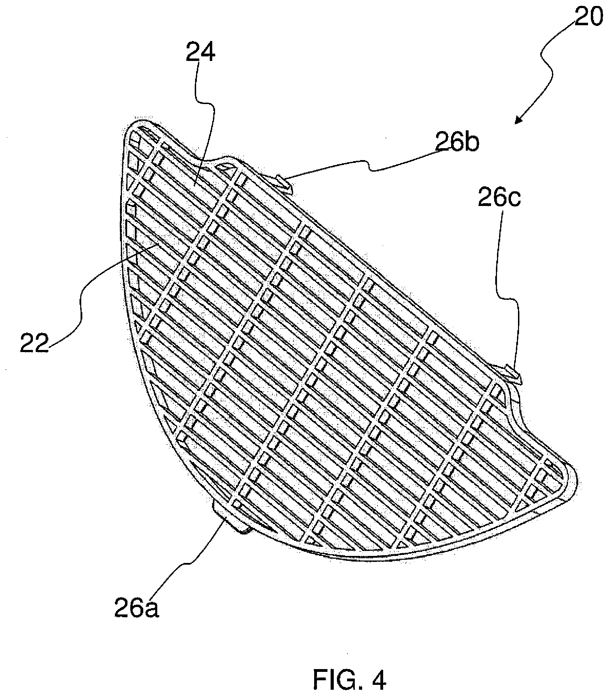

In accordance with an embodiment of the present invention, the protective grid **20** further includes first engagement elements **26a, 26b, 26c** configured thereon that engage with complimentary second engagement elements **12a, 12b, 12c** configured on the at least one outlet **10b** for facilitating detachable mounting of the protective grid **20** over the at least one outlet **10b.** **FIGURE 3** illustrates an isometric view of the protective grid **20** with the first engagement elements **26a, 26b, 26c** configured thereon. **FIGURE 4** illustrates another isometric view of the protective grid **20** configured with the first engagement elements **26a, 26b, 26c.** The engagement elements are at least one of snap fit engagement elements, clips, screws and expansion pins. In accordance with another embodiment of the present invention, the protective grid **20** is received in at least one socket configured around the at least one outlet **10b.** However, the present invention is not limited to any particular method of mounting the protective grid **20** over the at least one outlet **10b** and configuration of the engagement elements as far as the engagement elements are able to detachably mount the protective grid **20** over the at least one outlet **10b.** With such configuration, the protective grid system **100,** particularly, the protective grid **20** can be easily retrofitted on currently used cooling modules without requiring many modifications

## Claims

1. A vehicle cooling module with ducts for air and a protective grid system (100) for ducts of the cooling module, said protective grid system comprising:
• a housing (10) comprising at least one inlet (10c) adapted to be connected to the ducts for receiving air that had extracted heat from a region to be cooled and at least one outlet (10a,10b) for egress of the air there through; and
• at least one protective grid (20) adapted to be mounted over said at least one outlet (10b) to prevent articles of a predetermined size from entering inside said ducts of said cooling module while still permitting egress of air there through;
**characterized in that** the at least one outlet (10b) is configured at the terminal end of the duct directed to the ground.

2. The vehicle cooling module as claimed in the previous claim, wherein said housing (10) is configured with a fan system (30) for directing air from said at least one inlet to said at least one outlet (10a, 10b).

3. The vehicle cooling module as claimed in any of the preceding claims, wherein said protective grid (20) comprises an array of elements (22) adapted to define restricted air passages (24).

4. The vehicle cooling module as claimed in the preceding claim, wherein said elements (22) are horizontally and vertically disposed beams that cross each other to configure said restricted air passages (24).

5. The vehicle cooling module as claimed in the previous claim, wherein said beams are so configured and inclined that said beams are adapted to prevent entry of articles of the pre-determined size inside said ducts of said cooling module from outside the vehicle.

6. The vehicle cooling module as claimed in claim 3, wherein said elements (22) are honeycomb structures adapted to configure said restricted air passages (24).

7. The vehicle cooling module as claimed in any of the preceding claims, wherein said at least one protective grid (20) further comprises first engagement elements (26a, 26b, 26c) configured thereon and adapted to engage with complimentary second engagement elements (12a, 12b, 12c) configured on said at least one outlet (10b) for facilitating detachable mounting of said at least one protective grid (20) over said at least one outlet (10b).

8. The vehicle cooling module as claimed in the preceding claim, wherein said engagement elements are at least one of snap fit engagement elements, clips, screws and expansion pins.

9. The vehicle cooling module as claimed in any of the preceding claims, wherein said at least one protective grid (20) is of metal and is configured by stamping process.

10. The vehicle cooling module as claimed in any of the preceding claim 1 to 8, wherein said at least one protective grid (20) is formed of woven wires.

11. The vehicle cooling module as claimed in any of the preceding claim 1 to 8, wherein said at least one protective grid (20) is of composite plastic material and is configured by molding process.

12. The vehicle cooling module as claimed in any of the preceding claims, wherein said at least one protective grid (20) is received in at least one socket configured around said at least one outlet (10b).

## Patentansprüche

1. Fahrzeugkühlmodul mit Kanälen für Luft und einem Schutzgittersystem (100) für Kanäle des Kühlmoduls, wobei das Schutzgittersystem umfasst:
• ein Gehäuse (10), das mindestens einen Einlass (10c), der dazu ausgelegt ist, mit den Kanälen zum Aufnehmen von Luft verbunden zu sein, die einem zu kühlenden Bereich Wärme entzogen hatte, und mindestens einen Auslass (10a, 10b) für einen Austritt der Luft dort hindurch umfasst; und
• mindestens ein Schutzgitter (20), das dazu ausgelegt ist, über dem mindestens einen Auslass (10b) angebracht zu sein, um zu verhindern, dass Gegenstände einer vorbestimmten Größe in die Kanäle des Kühlmoduls eintreten, während es einen Austritt von Luft dort hindurch immer noch zulässt;
**dadurch gekennzeichnet, dass** der mindestens eine Auslass (10b) an dem Abschlussende des Kanals ausgebildet ist, das zum Boden gerichtet ist.

2. Fahrzeugkühlmodul nach dem vorausgehenden Anspruch, wobei das Gehäuse (10) mit einem Lüftersystem (30) zum Richten von Luft von dem mindestens einen Einlass auf den mindestens einen Auslass (10a, 10b) ausgebildet ist.

3. Fahrzeugkühlmodul nach einem der vorausgehenden Ansprüche, wobei das Schutzgitter (20) eine Anordnung von Merkmalen (22) umfasst, die dazu ausgelegt sind, begrenzte Luftdurchlässe (24) zu definieren.

4. Fahrzeugkühlmodul nach dem vorausgehenden Anspruch, wobei die Merkmale (22) horizontal und vertikal angeordnete Stäbe sind, die einander kreuzen, um die begrenzten Luftdurchlässe (24) auszubilden.

5. Fahrzeugkühlmodul nach dem vorausgehenden Anspruch, wobei die Stäbe so ausgebildet und geneigt sind, dass die Stäbe dazu ausgelegt sind, einen Eintritt von Gegenständen der vorbestimmten Größe in die Kanäle des Kühlmoduls von außerhalb des Fahrzeugs zu verhindern.

6. Fahrzeugkühlmodul nach Anspruch 3, wobei die Merkmale (22) Wabenstrukturen sind, die dazu ausgelegt sind, die begrenzten Luftdurchlässe (24) auszubilden.

7. Fahrzeugkühlmodul nach einem der vorausgehenden Ansprüche, wobei das mindestens eine Schutzgitter (20) ferner erste Eingriffsmerkmale (26a, 26b, 26c) umfasst, die daran ausgebildet und dazu ausgelegt sind, mit komplementären zweiten Eingriffsmerkmalen (12a, 12b, 12c) in Eingriff zu gelangen, die an dem mindestens einen Auslass (10b) zum Ermöglichen eines abnehmbaren Anbringens des mindestens einen Schutzgitters (20) über dem mindestens einen Auslass (10b) ausgebildet sind.

8. Fahrzeugkühlmodul nach dem vorausgehenden Anspruch, wobei die Eingriffsmerkmale mindestens eines von Schnappverschlusseingriffsmerkmalen, Klips, Schrauben und Spreizstiften sind.

9. Fahrzeugkühlmodul nach einem der vorausgehenden Ansprüche, wobei das mindestens eine Schutzgitter (20) aus Metall besteht und durch einen Stanzprozess ausgebildet ist.

10. Fahrzeugkühlmodul nach einem der vorausgehenden Ansprüche 1 bis 8, wobei das mindestens eine Schutzgitter (20) aus Drahtgewebe gebildet ist.

11. Fahrzeugkühlmodul nach einem der vorausgehenden Ansprüche 1 bis 8, wobei das mindestens eine Schutzgitter (20) aus Kunststoffverbundmaterial besteht und durch einen Formungsprozess ausgebildet ist.

12. Fahrzeugkühlmodul nach einem der vorausgehenden Ansprüche, wobei das mindestens eine Schutzgitter (20) in mindestens einer Aufnahme aufgenommen ist, die um den mindestens einen Auslass (10b) ausgebildet ist.

## Revendications

1. Module de refroidissement de véhicule avec des conduits pour de l'air et un système de grille de protection (100) pour des conduits du module de refroidissement, ledit système de grille de protection comprenant :
• un logement (10) comprenant au moins une entrée (10c) adaptée pour être raccordée aux conduits pour recevoir de l'air qui avait extrait de la chaleur à partir d'une région destinée à être refroidie et au moins une sortie (10a, 10b) pour faire sortir l'air à travers celle-ci ; et
• au moins une grille de protection (20) adaptée pour être montée par-dessus ladite au moins une sortie (10b) pour empêcher des articles d'une taille prédéterminée d'entrer à l'intérieur desdits conduits dudit module de refroidissement tout en permettant toujours de faire sortir de l'air à travers celle-ci ;
**caractérisé en ce que** l'au moins une sortie (10b) est configurée au niveau de l'extrémité terminale de la conduite dirigée vers le sol.

2. Module de refroidissement de véhicule selon la revendication précédente, dans lequel ledit logement (10) est configuré avec un système de ventilateur (30) pour diriger de l'air depuis ladite au moins une entrée jusqu'à ladite au moins une sortie (10a, 10b).

3. Module de refroidissement de véhicule selon l'une quelconque des revendications précédentes, dans lequel ladite grille de protection (20) comprend un réseau d'éléments (22) adaptés pour définir des passages d'air limités (24).

4. Module de refroidissement de véhicule selon la revendication précédente, dans lequel lesdits éléments (22) sont des barres disposées horizontalement et verticalement qui se croisent pour configurer lesdits passages d'air limités (24).

5. Module de refroidissement de véhicule selon la revendication précédente, dans lequel lesdites barres sont configurées et inclinées de telle sorte que lesdites barres soient adaptées pour empêcher des articles de la taille prédéterminée d'entrer à l'intérieur desdits conduits dudit module de refroidissement à partir de l'extérieur du véhicule.

6. Module de refroidissement de véhicule selon la revendication 3, dans lequel lesdits éléments (22) sont des structures en nid d'abeille adaptées pour configurer lesdits passages d'air limités (24).

7. Module de refroidissement de véhicule selon l'une quelconque des revendications précédentes, dans lequel ladite au moins une grille de protection (20) comprend en outre des premiers éléments d'entrée en prise (26a, 26b, 26c) configurés sur celle-ci et adaptés pour entrer en prise avec des seconds éléments d'entrée en prise complémentaires (12a, 12b, 12c) configurés sur ladite au moins une sortie (10b) pour faciliter le montage détachable de ladite au moins une grille de protection (20) par-dessus ladite au moins une sortie (10b).

8. Module de refroidissement de véhicule selon la revendication précédente, dans lequel lesdits éléments d'entrée en prise sont au moins un d'éléments d'entrée en prise à ajustement par encliquetage, de pièces de fixation, de vis et de chevilles expansibles.

9. Module de refroidissement de véhicule selon l'une quelconque des revendications précédentes, dans lequel ladite au moins une grille de protection (20) est de métal et est configurée par l'intermédiaire d'un procédé d'estampage.

10. Module de refroidissement de véhicule selon l'une quelconque de la revendication précédente 1 à 8, dans lequel ladite au moins une grille de protection (20) est formée de fils métalliques tissés.

11. Module de refroidissement de véhicule selon l'une quelconque de la revendication précédente 1 à 8, dans lequel ladite au moins une grille de protection (20) est de matériau plastique composite et est configurée par l'intermédiaire d'un procédé de moulage.

12. Module de refroidissement de véhicule selon l'une quelconque des revendications précédentes, dans lequel ladite au moins une grille de protection (20) est reçue dans au moins une douille configurée autour de ladite au moins une sortie (10b).
